# EUROPÄISCHE PATENTSCHRIFT

(11) **EP 1 714 172 B1**
(45) Veröffentlichungstag und Bekanntmachung des Hinweises auf die Patenterteilung: **04.03.2009**
(21) Anmeldenummer: 05733264.5
(22) Anmeldetag: 24.03.2005
(51) Int. Cl.: G02B 5/18, B23K 26/18, C03C 23/00

(54) **VERFAHREN ZUR HERSTELLUNG EINES OPTISCHEN BAUTEILS MITTELS OBERLÄCHENSTRUKTURIERENDER LASERBEARBEITUNG**
METHOD FOR THE PRODUCTION OF AN OPTICAL COMPONENT BY MEANS OF SURFACE-STRUCTURING LASER MACHINING
PROCEDE POUR PRODUIRE UN COMPOSANT OPTIQUE PAR USINAGE LASER PROVOQUANT UNE STRUCTURATION DE SURFACE

(30) Priorität: 27.03.2004 DE 102004015142
(43) Veröffentlichungstag der Anmeldung: 25.10.2006
(60) Teilanmeldung: 08016508.7
(73) Patentinhaber: LASER-LABORATORIUM GÖTTINGEN E.V., 37077 Göttingen (DE); Fraunhofer-Gesellschaft zur Förderung der angewandten Forschung e.V., 80686 München (DE)
(72) Erfinder: IHLEMANN, Jürgen, 37077 Göttingen (DE); SCHULZ-RUTHENBERG, Malte, 48145 Münster (DE); HEBER, Jörg, 99092 Erfurt (DE)
(74) Vertreter: Schneider, Peter Christian
(86) Internationale Anmeldenummer: PCT/EP2005/003134
(87) Internationale Veröffentlichungsnummer: WO 2005/093470

(56) Entgegenhaltungen:
- DE-A1- 3 508 469
- DE-A1- 10 017 614
- SECOND INTERNATIONAL SYMPOSIUM ON LASER PRECISION MICROFABRICATION 16-18 MAY 2001 SINGAPORE, Bd. 4426, 2002, Seiten 437-440, XP002335390 Proceedings of the SPIE - The International Society for Optical Engineering SPIE-Int. Soc. Opt. Eng USA ISSN: 0277-786X
- J.KOLBE ET AL.: "Optical properties and damage thresholds of dielectric UV/VUV-coatings deposited by conventional evaporation, IAD and IBS" LASER-INDUCED DAMAGE IN OPTICAL MATERIALS, Bd. 1624, 1991, Seiten 221-235, XP002335391 Proceedings of the SPIE - The International Society for Optical Engineering SPIE-Int. Soc. Opt. Eng USA

## Beschreibung

Die Erfindung betrifft ein Verfahren zur Herstellung eines optischen Bauteils, mit dem aufgrund seiner durch ein ein- oder mehrstufiges Profil strukturierten Oberfläche eine optische Funktion für elektromagnetische Strahlung eines Anwendungs-wellenlängenbereichs erzielbar ist, wobei die Oberflächenstrukturierung mit Hilfe einer ablatierenden Laserbearbeitung mit einer Laserstrahlung eines Bearbeitungs-Wellenlängenbereichs durchgeführt wird.

Die Mikromaterialbearbeitung mit Lasern wird für verschiedene Anwendungen der Optik, Mechanik, Strömungstechnik und Elektronik eingesetzt. Beispiele dafür sind das Bohren von Mikrolöchern in Leiterplatten oder Tintenstrahlköpfen, das Trimmen von elektrischen Bauteilen, das Abisolieren von Leitungen oder die Herstellung von medizinischen Stents. Bei der Herstellung fein strukturierter optischer Bauteile, beispielsweise solcher Komponenten, die zur Strahlführung und Strahlhomogenisierung für diese Anwendungen benötigt werden, hängt die Präzision der Bearbeitung eng mit dem optischen Absorptionsvermögen bei der entsprechenden Laserwellenlänge zusammen. Nur stark absorbierendes Material kann mit hoher Präzision bearbeitet werden. Insbesondere zur Erzeugung eines bestimmten Profils, bzw. einer bestimmten Struktur, durch Laserablation ist ein hohes Absorptionsvermögen des zu bearbeitenden Materials Voraussetzung. Dabei wird die gewünschte Struktur, beispielsweise eine Maske, durch Abtragen des Materials an den bestrahlten Stellen erzeugt. Andererseits absorbieren optische Gläser und andere optische Materialien (Kristalle) im optischen Spektralbereich, d.h. bei Wellenlängen vom Sichtbaren bis zum Ultravioletten (UV), bestimmungsgemäß nur schwach und können daher mit Lasern, die in diesem Spektralbereich emittieren, nicht mit hoher Präzision bearbeitet werden.

Von besonderer Bedeutung ist der zunehmende Bedarf an funktionellen UV-Optiken, beispielsweise an diffraktiven optischen Elementen (Phasenelemente, Amplitudenelemente) zur Strahlformung und Strahlhomogenisierung von gepulsten UV-Excimerlasern, die für die Mikromaterialbearbeitung prädestiniert sind. Da diese Optiken insbesondere für die typischen Wellenlängen (193nm, 248nm) der Excimerlaser transparent sein sollen, kommen zur Herstellung dieser Optiken nur noch kürzere Wellenlängen (157nm), für die das optische Material, beispielsweise Quarzglas, ausreichend absorbierend ist, in Frage. Die Bearbeitung mit derartig extrem kurzen Wellenlängen ist jedoch außerordentlich schwierig und aufwendig. Zudem.bleibt die Anwendung der derart hergestellten Optiken immer auf höhere Anwendungs-Wellenlängen als die Bearbeitungs-Wellenlänge beschränkt. Daher hat sich die Laserablation in der Optikfertigung noch nicht etabliert, obwohl sie insbesondere in der Fertigung miniaturisierter, komplex geformter Optiken, gegenüber klassischen (mechanisches Schleifen und Polieren) oder lithografischen Fertigungstechniken Vorteile hat.

Insbesondere bei der Fertigung von Einzelstücken oder Kleinserien ist der Aufwand in Kosten, Zeit und Komplexität des Herstellungsprozesses, durch die vielfältigen Schritte der lithografischen Verfahren (Beschichten, Belichten, Entwickeln, Ätzen) hoch und die Flexibilität in der Formgebung begrenzt. Insbesondere kann die Laserbearbeitung im Gegensatz zu lithografischen Verfahren auch problemlos auf gekrümmte Oberflächen angewendet werden.

Aus der DE 100 17 614 A1 ist ein Verfahren zur Herstellung einer dielektrischen Reflexionsmaske bekannt, bei dem vor der strukturierenden Laserbestrahlung des Bauteils, zwischen einem Substrat und einem Reflexionsmasken-Schichtsystem, bestehend aus alternierenden Schichten mit hohem und niedrigem Brechungsindex, eine die Bearbeitungs-Wellenlänge absorbierende Schicht angeordnet wird. Nach der strukturierenden Ablation der Absorptionsschicht können an den bestrahlten Stellen nicht entfernte Reste der Absorptionsschicht zurückbleiben, die die Transparenz der Maske für die Anwendungs-Wellenlänge unerwünscht beeinträchtigen können. Diese Rückstände können dann in einem nachfolgenden Materialumwandlungsschritt in ein transparentes Material umgewandelt werden, um die Maskentransmission zu verbessern.

Das bekannte Verfahren hat zwar den Vorteil, dass bei der Herstellung einer Reflexionsmaske die Beschränkung der Anwendungs-Wellenlänge auf Wellenlängen größer als die Bearbeitungs-Wellenlänge aufgehoben wird, nachteilig wirkt sich jedoch aus, dass eine optische Funktion des Bauteils nur im Zusammenwirken mit der zuvor aufgebrachten Maskenschicht realisiert wird. Die Absorptionsschicht ist hingegen nur bei der Herstellung der Maske wirksam. Das verfahren ist auch nur zur Rückseitenablation von der Substratseite her geeignet. Für die Herstellung anderer Bauteile, insbesondere mit mehrstufigen Profilen, wie sie für viele Anwendungen gefordert werden, ist dieses Verfahren eher ungeeignet.

Aufgabe der vorliegenden Erfindung ist es daher, ein Verfahren zur Herstellung eines optischen Bauteils für elektromagnetische Strahlung mittels Laserbearbeitung anzugeben, bei dem die Anwendungs-Wellenlänge der zur Anwendung vorgesehenen elektromagnetischen Strahlung unabhängig von der Bearbeitungs-wellenlänge der Laserstrahlung wählbar ist, mit dem ein- und mehrstufige Profile an dem Bauteil erzeugbar sind, und das flexibel an verschiedenartigen Bauteilen wahlweise mit vorder- und/oder rückseitiger Bearbeitung anwendbar ist.

Diese Aufgabe wird in Verbindung mit dem Oberbegriff des Anspruches 1 dadurch gelöst, dass folgende Schritte durchgeführt werden:
a) Bereitstellung eines Vollkörpers aus einem Oxid-Material, das in einem unvollständig oxidierten Rohzustand die Laserstrahlung des Bearbeitungs-Wellenlängenbereichs in für die ablatierende Laserbearbeitung ausreichendem Maße und die elektromagnetische Strahlung des Anwendungs-wellenlängenbereiches in für die Erzielung der optischen Funktion zu hohem Maße absorbiert und das in einem vollständig oxidierten Zustand ein geringeres Maß an Absorption für die elektromagnetische Strahlung des Anwendungs-Wellenlängenbereiches aufweist,
b) Durchführung der ablatierenden Laserbearbeitung des Vollkörpers mit einem oder mehreren Bearbeitungsschritten, sodass eine durch ein ein- oder mehrstufiges Profil strukturierte Oberfläche des Vollkörpers geschaffen wird, und
c) Materialumwandlung mittels Oxidation des Vollkörpers in einen, die vorgesehene optische Funktion erfüllenden Endzustand, in dem der Vollkörper für die elektromagnetische Strahlung im Anwendungs-Wellenlängenbereich in für die optische Funktion ausreichendem Maße transparent ist.

Durch das erfindungsgemäße Verfahren wird ein Prozess zur Verfügung gestellt, bei dem die Laserbearbeitung (oberflächenstrukturierung) des Bauteils zur Erzeugung der optischen Funktion, in einem ausreichend absorbierenden zustand erfolgen kann. Das in der Form fertige Bauteil wird für die Ermöglichung der optischen Funktion in einen transparenten zustand überführt, wobei ein Material verwendet wird, dessen Absorption / Transmission durch eine Materialumwandlung, die die Form unverändert lässt, über weite Bereiche geändert werden kann.

Dadurch, dass zur Laserbearbeitung ein Vollkörper verwendet wird, der in einem Anfangszustand die Wellenlänge des Bearbeitungslasers absorbiert und in einem Endzustand, nach einer Materialumwandlung, im Anwendungs-Wellenlängenbereich transparent ist, kann ein optisches Bauteil für Wellenlängen, die unabhängig von der Bearbeitungs-Wellenlänge sind, hergestellt werden, ohne das eine Absorptionsschicht aufgebracht werden muss, da der Vollkörper im Rohzustand selbst die Absorptionseigenschaft aufweist. Dies wirkt sich besonders kostengünstig und zeitsparend aus. Insbesondere kann die Bearbeitungs-Wellenlänge innerhalb des (späteren) Anwendungswellenlängenbereichs liegen, beispielsweise kann eine Bearbeitungswellenlänge und eine Anwendungswellenlänge jeweils 193nm sein. Da die geeigneten Ausgangsmaterialien in der Regel ein kontinuierlich abfallendes Absorptionsverhalten von kurzen zu langen Wellenlängen zeigen, und damit eine entsprechend kontinuierlich abfallende Laserbearbeitbarkeit sowie eine kontinuierlich zunehmende Anwendbarkeit als optisches Element aufweisen, sind bei der Herstellung des Bauteils auch Zwischenzustände möglich, die diesen graduellen Absorptions/-Transmissionsänderungen Rechnung tragen. Beispielsweise kann das Ausgangsmaterial für eine erste Wellenlänge im Bearbeitungs-Wellenlängenbereich stark absorbierend und für eine zweite Wellenlänge mäßig absorbierend sein, so dass das Absorptionsvermögen für eine präzise Bearbeitung bei dieser zweiten Wellenlänge nicht ausreichend, andererseits für die optische Anwendung aber noch zu hoch ist. Wird dann die Laserbearbeitung mit der ersten Wellenlänge durchgeführt, so kann das Material nach der Materialumwandlung für die zweite Wellenlänge jetzt hoch transparent sein und für die erste Wellenlänge jetzt mäßig absorbierend sein. D.h., bei der Materialumwandlung wird ein bestimmter Transmissionsgrad (im Idealfall bis hin zur totalen Transparenz) im Bearbeitungs-Wellenlängenbereich je nach Bearbeitungs-Wellenlänge erreicht. In jedem Fall ist für den Ausgangszustand des Bauteils eine ausreichende Absorption der Bearbeitungs-Wellenlänge für eine präzise Bearbeitung und für den Endzustand eine ausreichende Transparenz für die gewünschte(n) Anwendungswellenlänge(n) zur Erfüllung der optischen Funktion maßgebend.

Bei der Materialumwandlung wird der gesamte Vollkörper für den Anwendungs-Wellenlängenbereich transparent. Die bei einer strukturierenden Ablation an einer Oberfläche des Vollkörpers bestrahlten, d.h. ablatierten Bereiche und die nicht bestrahlten Bereiche wirken nach der Materialumwandlung, d.h. im transparenten zustand, in ihrer optischen Funktion zusammen. Die Materialumwandlung wird dazu auf die bestrahlten und die nicht bestrahlten Bereiche angewandt. Die Laserbearbeitung des Vollkörpers ist besonders zum Abtrag relativ großflächiger Schichten, aber auch zur Erzeugung von strukturierten Mustern geeignet. Insbesondere bei der Verwendung von UV-Pulslasern, beispielsweise Excimerlasern mit den Wellenlängen 193nm und 248nm, die für die Mikromaterialbearbeitung besonders geeignet sind, können über eine Einstellung der Pulsenergien und der Pulszahlen, mehrstufige Profile (Oberflächenreliefs) erzeugt werden.

Für die Herstellung einer mehrstufigen Struktur wird die Oberfläche des Bauelements vorzugsweise pixelweise in aufeinanderfolgenden Bearbeitungsschritten bestrahlt. Dabei wird beispielsweise eine einheitliche Pulsenergie, bzw. Pulsenergiedichte (Fluenz) gewählt und die Anzahl der Pulse variiert. Die Fluenz wird so eingestellt, dass das Material bis zu einer bestimmten Tiefe abgetragen wird. Durch die Wahl unterschiedlicher Pulszahlen an unterschiedlichen Bestrahlungsstellen kann dann ein mehrfach abgestuftes Profil erzeugt werden. Insbesondere zur Herstellung eines zweistufigen Profils, d.h. einer Struktur mit zweig Höhenniveaus (die nicht abgetragene Ebene und eine abgetragene Ebene), ist eine gleichzeitige strukturierende Bestrahlung über die gesamte Fläche mittels eines Abbildungselementes, das die Struktur enthält, beispielsweise über eine sogenannte Mastermaske, aufgrund einer erheblichen Zeitersparnis besonders vorteilhaft. Als Stufen werden makroskopische bis hin zu infitesimalen Ablationen verstanden, so dass auch quasi kontinuierlich verlaufende Profile erzeugbar sind.

Zur Erleichterung der Handhabung kann der Vollkörper auf einem, vorzugsweise transparenten, Trägerkörper aufgebracht sein, der auch Bestandteil des fertigen optischen Bauteils sein kann.

Als Ausgangsmaterial für den Vollkörper ist SiOₓ besonders für die Anwendung mit UV-Lasern geeignet. Bei dem SiOₓ - Material mit 1 < x < 2 handelt es sich um eine nichtstöchiometrische Siliziumoxid - Verbindung (partiell oxidiertes, aber makroskopisch homogenes Material), die für UV-Strahlung stark absorbierend ist. Als SiO₂ (volloxidiertes Material) ist das Material für UV-Strahlung hingegen hoch transparent und weist zudem eine hohe Zerstörschwelle auf, so dass es für hohe Energiedichten geeignet ist. Die Materialumwandlung ist durch Erhitzen des Materials unter einer oxidierenden Atmosphäre (beispielsweise in Luft) in einer geeigneten Vorrichtung realisierbar. Dabei wird das SiOₓ-Material zu SiO₂ oxidiert. In Versuchsreihen hat sich die thermische Materialumwandlung (Oxidation) eines SiOₓ - Bauteils in Luft für etwa acht bis neun Stunden bei etwa 900°C als besonders effektiv erwiesen. Durch diese Behandlung lässt sich eine besonders hohe Transparenz (intrinsische Transparenz > 90% für 193nm) erzielen. Kürzere Oxidationszeiten und/oder kleinere Temperaturen.ergeben schlechtere resultierende Transparenzwerte, mit längeren Oxidationszeiten und/oder höheren Temperaturen lässt sich keine signifikante weitere Verbesserung erzielen. Grundsätzlich ist auch eine photochemische Oxidation durch flächige oder örtlich aufgelöste Laserbestrahlung unterhalb der Ablationsschwelle in einer oxidierenden Atmosphäre mit oder ohne weitere thermische Behandlung möglich. Es ist auch denkbar, gezielt Material lokal aufgelöst umzuwandeln, wodurch sich noch weiterreichende Möglichkeiten der Erzeugung optischer Strukturen (auch unabhängig von einem Materialabtrag) ergeben.

Grundsätzlich kann das Verfahren auch mit anderen Materialien im sichtbaren oder sogar im infraroten Spektralbereich angewendet werden. Als Materialien sind prinzipiell oxidische Materialien wie Metalloxide und Halbleiteroxide verwendbar. Für den UV-Wellenlängenbereich sind neben Siliziumoxid(SiOₓ) Aluminiumoxid, Scandiumoxid, Hafniumoxid und Yttriumoxid besonders geeignet. Für den sichtbaren Spektralbereich sind Tantaloxid und Titanoxid besonders geeignet.

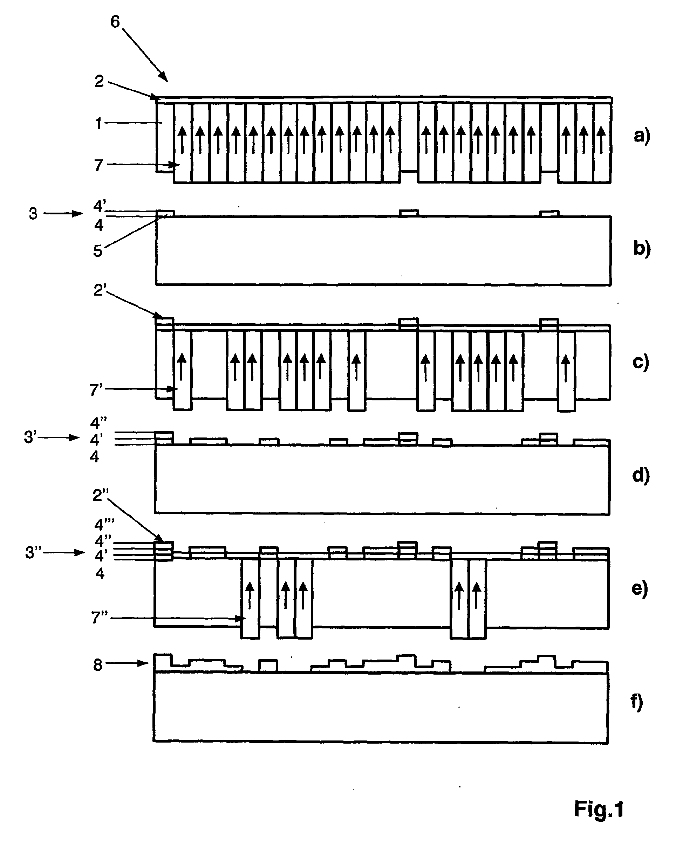

Weitere Einzelheiten ergeben sich aus der nachfolgenden ausführlichen Beschreibung und der beigefügten Zeichnung, in der eine nicht erfindungsgemäße Ausführungsform eines Verfahrens zur Herstellung eines optischen Bauteils veranschaulicht ist. Die Figur 1 zeigt ein Schema zur Herstellung eines vierstufigen diffraktiven Phasenelements durch mehrfache Schichtdeposition und Laserablation.

Ein Verfahren zur Herstellung eines optischen Bauteils 6 beruht im Wesentlichen auf einem mehrfachen Durchlaufen eines Bearbeitungszyklus, bestehend aus einem Depositionsschritt einer Absorptionsschicht und einem strukturbildenden Laserablationsschritt sowie auf einer Materialumwandlung, bei der das Bauteil 6 in einen für die Laserstrahlung transparenten Endzustand umgewandelt wird.

Das Verfahren wird am Beispiel eines vierstufigen diffraktiven Phasenelementes (DPE) für UV-Wellenlängen erläutert. Seine Wirkungsweise beruht auf der Beugung von Licht an einem fein strukturierten Oberflächenrelief in einem optischen Material. Durch Beugung und Interferenz einer einfallenden elektromagnetischen Welle, beispielsweise eines Laserstrahls, an dem DPE, kann eine gewünschte Intensitätsverteilung in einer sogenannten Signalebene bewirkt werden. Bei DPEs wird nur die Phase der Lichtwelle moduliert, d.h. sie lassen praktisch vollständig transmittive Elemente zu (Diffraktive Amplitudenelemente (DAE) modulieren dagegen die Amplitude der einfallenden Lichtwelle, d.h. sie sind immer verlustbehaftet). Beispielsweise kann damit das Strahlprofil eines Excimerlasers für eine nachfolgende Anwendung geformt und homogenisiert werden. Das dafür notwendige Oberflächenrelief wird zuvor mittels eines im Prinzip bekannten Rechenalgorithmus, beispielsweise eines computergenerierten Hologramms, berechnet. Die Gesamttiefe der Struktur ist dabei durch die Beziehung D=(q-1)/q×λ/(n-1) gegeben, wobei q die Anzahl der Höhenniveaus, also q-1 die Anzahl der Stufen, λ die Wellenlänge, bei der das DPE seine optische Funktion erfüllen soll und n der Brechungsindex des Materials des DPE in Luft ist. Für ein vierstufiges Element für eine Anwendungs-Wellenlänge von beispielsweise 193nm ergibt sich bei einem Brechungsindex von n=1,561 somit eine Gesamtstrukturtiefe von 258nm bei einer jeweiligen Stufenhöhe von 86nm.

Auf ein Substrat 1, vorteilhaft als ein Quarzkörper ausgebildet, wird durch Aufdampfen (Deposition) eine erste Absorptionsschicht 2 mittels einer geeigneten, prinzipiell bekannten Apparatur, aufgebracht. Über eine (nicht dargestellte) erste (berechnete) Maske wird die Absorptionsschicht 2 anschließend an den bestrahlten Positionen bis auf die Substrathöhe mit einer Laserstrahlung 7 ablatiert (Fig. 1a). Alternativ kann die Bearbeitung auch durch pixelweises Abfahren der Oberfläche des Bauteils 6 über eine entsprechende Ansteuerung des Lasers erfolgen. Die Laserenergie zur Ablation wird der aufgebrachten Schichtdicke angepasst und ist so gewählt, dass die Absorptionsschicht vollständig entfernt wird, das Substrat 1 dabei aber unbeschädigt bleibt. Die Bearbeitung erfolgt substratseitig, d.h. als eine Rückseitenablation. Für die Laserablation wird beispielsweise ein UV-Excimerlaser mit einer Wellenlänge von 193nm, d.h. mit der gleichen Wellenlänge, die für die spätere Funktion des DPE vorgesehen ist, eingesetzt. Die Absorptionsschicht 2 besteht aus einem SiOₓ - Material, das bei 193nm stark absorbierend ist. Das Ergebnis dieses ersten Bearbeitungszyklus ist eine Oberfläche mit einer Struktur 3 mit zwei Höhenniveaus 4, 4', d.h. mit einer Stufe 5 (Fig. 1b). Ein vierstufiges Element hat also vier Höhenniveaus (Levels) und drei Stufen. Ein zweiter Bearbeitungszyklus beginnt mit der Deposition einer zweiten Absorptionsschicht 2', die auf die im ersten Zyklus erzeugte Struktur 3 aufgedampft wird (Fig. 1c). Anschließend erfolgt eine zweite Ablation mit einer strukturierenden Laserstrahlung 7' (über eine zweiten Maske, bzw. pixelweise), wobei die Struktur 3' mit drei Höhenniveaus 4, 4', 4" entsteht (Fig. 1d). In einem dritten Bearbeitungszyklus aus Beschichtung (Deposition) und Ablation entsteht in gleicher Weise über eine Absorptionsschicht 2" mit einer Laserablation 7" die Struktur 3" mit vier Höhenniveau 4, 4', 4", 4"' (Fig. le). Bei einer abschließenden thermischen Materialumwandlung (Fig. 1f), bei der das Bauteil 6 in einem Ofen über mehrere Stunden in Luft auf mehrere 100°C erhitzt wird, oxidiert das Strukturmaterial SiOₓ zu SiO₂ und wird dadurch für die Laserwellenlänge transparent. Somit entsteht schließlich aus der Struktur 3" ein vierstufiges transparentes Profil 8, das die gewünschte optische Funktion als DPE für die Betriebswellenlänge erfüllt.

Wird statt der mehrfachen Ablation und Deposition einer Absorptionsschicht ein Vollkörper bearbeitet oder nicht die gesamte Schichtdicke abgetragen, so wird die Pulsenergiedichte und die Pulszahl des Lasers ausgenutzt, um definierte Stufentiefen, bzw. ein quasi kontinuierliches Profil, in dem absorbierenden Material zu erzielen, wobei es hier auf eine sehr genaue Einstellung der obigen Parameter sowie des Strahlprofils (Laserstrahlcharakteristik), ggf. mit Hilfe vorgeschalteter optischer Elemente ankommt, um eine hohe Genauigkeit zu erreichen, da die (hilfreiche) "Sollbruchstelle" Substrat - Absorptionsschicht wegfällt.

## Patentansprüche

1. verfahren zur Herstellung eines optischen Bauteils, mit dem aufgrund seiner durch ein ein- oder mehrstufiges Profil strukturierten Oberfläche eine optische Funktion für elektromagnetische Strahlung eines Anwendungs-Wellenlängenbereichs erzielbar ist, wobei die Oberflächenstrukturierung mit Hilfe einer ablatierenden Laserbearbeitung mit einer Laserstrahlung eines Bearbeitungs-Wellenlängenbereichs durchgeführt wird,
**dadurch gekennzeichnet, dass**
folgende Schritte durchgeführt werden:
a) Bereitstellung eines Vollkörpers aus einem oxid-Material, das in einem unvollständig oxidierten Rohzustand die Laserstrahlung des Bearbeitungs-Wellenlängenbereichs in für die ablatierende Laserbearbeitung ausreichendem Maße und die elektromagnetische Strahlung des Anwendungs-Wellenlängenbereiches in für die Erzielung der optischen Funktion zu hohem Maße absorbiert und das in einem vollständig oxidierten Zustand ein geringeres Maß an Absorption für die elektromagnetische Strahlung des Anwendungs-wellenlängenbereiches aufweist,
b) Durchführung der ablatierenden Laserbearbeitung des Vollkörpers mit einem oder mehreren Bearbeitungsschritten, sodass eine durch ein ein- oder mehrstufiges Profil strukturierte Oberfläche des Vollkörpers geschaffen wird, und
c) Materialumwandlung mittels Oxidation des Vollkörpers in einen, die vorgesehene optische Funktion erfüllenden Endzustand, in dem der Vollkörper für die elektromagnetische Strahlung im Anwendungs-Wellenlängenbereich in für die optische Funktion ausreichendem Maße transparent ist.

2. Verfahren nach Anspruch 1,
**dadurch gekennzeichnet, dass**
mit einem UV-Pulslaser mit einer vorgewählten Pulsenergiedichte das Material des Bauteils bis zu einer definierten Tiefe an den bestrahlten Stellen ablatiert wird.

3. Verfahren nach Anspruch 2,
**dadurch gekennzeichnet, dass**
durch ein jeweiliges Einstellen der Pulsenergiedichte und der Anzahl der Pulse, ein abgestuftes Profil mit einer wählbaren Stufenzahl mit definierten Stufenhöhen, an dem Bauteil hergestellt wird.

4. Verfahren nach einem der vorangehenden Ansprüche,
**dadurch gekennzeichnet, dass**
als Rohmaterial eine nichtstöchiometrische SiOₓ - Verbindung mit im Mittel 1 < x < 2 verwendet wird, und dass das SiOₓ - Material durch die Materialumwandlung in einen Endzustand aus SiO₂ umgewandelt wird.

5. Verfahren nach einem der Ansprüche 1 bis 4,
**dadurch gekennzeichnet, dass**
das Rohmaterial aus einer Materialgruppe bestehend aus Aluminiumoxid, Scandiumoxid, Hafniumoxid, Yttriumoxid, Tantaloxid und Titanoxid, ausgewählt wird.

6. Verfahren nach einem der vorangehenden Ansprüche,
**dadurch gekennzeichnet, dass**
die Materialumwandlung ein Oxidationsschritt durch thermische Behandlung des Bauteils in einer Oxidationsatmosphäre ist.

7. Verfahren nach Anspruch 6,
**dadurch gekennzeichnet, dass**
bei der thermischen Oxidation das Bauteil für acht bis neun Stunden einer Temperatur von etwa 900°C ausgesetzt wird.

8. Verfahren nach einem der vorangehenden Ansprüche,
**dadurch gekennzeichnet, dass**
durch Bestrahlung des Bauteils (6) mit einer Laserstrahlung (7) in einer Oxidationsatmosphäre, das bestrahlte Material zumindest in Teilbereichen photochemisch umgewandelt wird.

9. Verfahren nach einem der vorangehenden Ansprüche,
**dadurch gekennzeichnet, dass**
die Bearbeitung des Bauteils (6) durch eine pixelweise Bestrahlung der Bearbeitungsfläche in aufeinanderfolgenden Schritten erfolgt oder dass die Bearbeitung ganzflächig mit Hilfe mindestens eines Abbildungselementes erfolgt.

## Claims

1. A method for the production of an optical component which, due to its single-step or multi-step profiled surface structure, is able to achieve an optical function for electromagnetic radiation in an application wavelength range, wherein the surface structuring is carried out by means of ablative laser machining using a laser beam in a machining wavelength range,
**characterized in that**
the following steps are carried out:
a) provision of a solid body made from an oxide material that in an incompletely oxidized raw state absorbs the laser radiation in the machining wavelength range to an adequate extent for the ablative laser machining, and absorbs the electromagnetic radiation in the application wavelength range to an extent that is too high to achieve the optical function, and that in a fully oxidized state is less absorptive for the electromagnetic radiation in the application wavelength range,
b) implementation of ablative laser machining of the solid body in one or more machining steps, so that a single-step or multi-step profiled surface structure of the solid body is created, and
c) material transformation by oxidizing the solid body into a final state that meets the needs of the intended optical function, in which state the solid body is sufficiently transparent to the electromagnetic radiation in the application wavelength range for the optical function to be achieved.

2. A method according to Claim 1,
**characterized in that**
a UV pulsed laser having a pre-selected pulse energy density is used to ablate the material of the component down to a defined depth at the irradiated sites.

3. A method according to Claim 2,
**characterized in that**
a stepped profile having a selectable number of steps with defined step heights is produced on the component by respectively setting the pulse energy density and the number of pulses.

4. A method according to any of the preceding claims,
**characterized in that**
a non-stoichiometric SiOₓ compound at an average of 1 < x < 2 is used as the raw material, and also **characterized in that** the SiOₓ material is transformed by a material transformation process into a final state consisting of SiO₂.

5. A method according to any of Claims 1 to 4,
**characterized in that**
the raw material is selected from a group of materials comprising aluminium oxide, scandium oxide, hafnium oxide, yttrium oxide, tantalum oxide and titanium oxide.

6. A method according to any of the preceding claims,
**characterized in that**
the material transformation process is an oxidation step carried out by thermally treating the component in an oxidizing atmosphere.

7. A method according to Claim 6,
**characterized in that**
during the thermal oxidation process, the component is exposed for eight to nine hours to a temperature of about 900°C.

8. A method according to any of the preceding claims,
**characterized in that**
by irradiating the component (6) with a laser beam (7) in an oxidizing atmosphere, at least partial areas of the irradiated material are photochemically transformed.

9. A method according to any of the preceding claims,
**characterized in that**
the machining of the component (6) is carried out by irradiating the machined area pixel-by-pixel in successive steps, or by machining the entire area using at least one imaging element.

## Revendications

1. Procédé pour produire un composant optique avec lequel on peut obtenir, en raison de sa surface structurée par un profil à un ou plusieurs gradins, une fonction optique pour le rayonnement électromagnétique d'une gamme d'ondes d'application, sachant que la structuration de surface est effectuée à l'aide d'un usinage laser ablatif avec un rayonnement laser d'une gamme d'ondes d'usinage,
**caractérisé en ce que**
les étapes suivantes sont exécutées :
a) fourniture d'un corps plein en un matériau à base d'oxyde, qui dans un état brut incomplètement oxydé absorbe le rayonnement laser de la gamme d'ondes d'usinage dans une mesure suffisante pour le rayonnement laser ablatif et le rayonnement électromagnétique de la gamme d'ondes d'application dans une mesure trop élevée pour obtenir la fonction optique, et qui dans un état complètement oxydé présente une absorption réduite pour le rayonnement électromagnétique de la gamme d'ondes d'application.
b) exécution du rayonnement laser ablatif du corps plein en une ou plusieurs étapes d'usinage, de sorte qu'est créée une surface du corps plein qui est structurée par un profil à un ou plusieurs gradins, et
c) transformation du matériau, par oxydation du corps plein, dans un état final remplissant la fonction optique prévue, état dans lequel le corps plein est transparent pour le rayonnement électromagnétique dans la gamme d'ondes d'application dans une mesure suffisante pour la fonction optique.

2. Procédé selon la revendication 1, **caractérisé en ce que**, avec un laser pulsé à rayonnement ultraviolet ayant une densité d'énergie pulsatoire présélectionnée, on effectue une ablation du matériau du composant jusqu'à une profondeur définie aux endroits irradiés.

3. Procédé selon la revendication 2, **caractérisé en ce que**, par un réglage respectif de la densité d'énergie pulsatoire et du nombre d'impulsions, on produit sur le composant un profil à gradins avec un nombre sélectionnable de gradins ayant des hauteurs de gradin définies.

4. Procédé selon l'une des revendications précédentes, **caractérisé en ce qu'**on utilise comme matériau brut un composé non stoechiométrique de SiOₓ avec en moyenne 1 < x < 2, et **en ce que** le matériau à base de SiOₓ est, par la transformation de matière, transformé dans un état final en SiO₂.

5. Procédé selon l'une des revendications 1 à 4, **caractérisé en ce que** le matériau brut est sélectionné dans un groupe de matériaux constitué de l'oxyde d'aluminium, l'oxyde de scandium, l'oxyde d'hafnium, l'oxyde d'yttrium, l'oxyde de tantale et l'oxyde de titane.

6. Procédé selon l'une des revendications précédentes, **caractérisé en ce que** la transformation de matière est une étape d'oxydation par traitement thermique du composant dans une atmosphère oxydante.

7. Procédé selon la revendication 6, **caractérisé en ce que**, lors de l'oxydation thermique, le composant est exposé pendant huit à neuf heures à une température d'environ 900°C.

8. Procédé selon l'une des revendications précédentes, **caractérisé en ce que**, par irradiation du composant (6) par un rayonnement laser (7) dans une atmosphère oxydante, le matériau irradié est transformé photochimiquement au moins dans des régions partielles.

9. Procédé selon l'une des revendications précédentes, **caractérisé en ce que** l'usinage du composant (6) s'effectue par une irradiation pixel par pixel de la surface usinée en étapes successives, ou **en ce que** l'usinage s'effectue sur toute la surface à l'aide d'au moins un élément de reproduction.
